Europäisches Patentamt

European Patent Office

Office européen des brevets

(19)

(11) **EP 0 821 018 A2**

(12) **EUROPÄISCHE PATENTANMELDUNG**

(43) Veröffentlichungstag:
28.01.1998  Patentblatt 1998/05

(51) Int. Cl.$^6$: **C08F 255/00**, C08L 51/06
// (C08F255/00, 230:08)

(21) Anmeldenummer: 97111905.2

(22) Anmeldetag: 12.07.1997

(84) Benannte Vertragsstaaten:
AT BE CH DE DK ES FI FR GB GR IE IT LI LU MC NL PT SE
Benannte Erstreckungsstaaten:
SI

(30) Priorität: 22.07.1996 DE 19629429
22.07.1996 DE 19629427

(71) Anmelder:
**PCD-Polymere Gesellschaft m.b.H.**
**A-4021 Linz (AT)**

(72) Erfinder:
• **Rätzsch, Manfred, Prof. Dr.**
**4202 Kirchschlag (AT)**
• **Hesse, Achim, Dr.**
**4020 Linz (AT)**

• **Bucka, Hartmut**
**4622 Eggendorf (AT)**
• **Leistner, Dirk, Dr.**
**1050 Wien (AT)**
• **Ivanchev, Sergej, Prof. Dr.**
**Sankt Petersburg (RU)**
• **Heikin, Saul, Dr.**
**Sankt Petersburg (RU)**
• **Mesh, Alla, Dr.**
**Sankt Petersburg (RU)**
• **Pukschanski, Moisej**
**Sankt Petersburg (RU)**

(74) Vertreter:
**Schinke, Herbert, Dr. Dr.,**
**Patentanwaltskanzlei**
**LEUPATENT,**
**Am Haupttor, Bürocenter**
**06236 Leuna (DE)**

(54) **Vernetzbare olefinische Polymere und Verfahren zu ihrer Herstellung**

(57) Vernetzbare olefinische Polymere, die aus Mischungen aus olefinischen Polymeren und pfropffähigen ethylenisch ungesättigten Organosilanverbindungen nach einem Zweistufenverfahren unter Einsatz von thermisch zerfallenden Radikalbildnern durch Erwärmung der Mischungen auf eine Temperatur von 30 bis 110°C unterhalb der Erweichungstemperatur bzw. des Kristallitschmelzpunkts der eingesetzten olefinischen Polymeren und nachfolgende Erwärmung der Mischungen auf eine Reaktionstemperatur von 10 bis 60 °C unterhalb der Erweichungstemperatur bzw. des Kristallitschmelzpunkts der eingesetzten olefinischen Polymeren hergestellt wurden, oder nach einem Verfahren unter Einwirkung ionisierender Strahlung bei gleichzeitiger Sorption der Organosilanverbindungen und Strahleneinwirkung hergestellt wurden, sind zur Erzeugung von Folien, Fasern, Platten, Beschichtungen, Rohren, Hohlkörpern, Schaumstoffen und Formteilen geeignet.

EP 0 821 018 A2

**Beschreibung**

Die Erfindung betrifft vernetzbare olefinische Polymere aus olefinischen Polymeren und ethylenisch ungesättigten Organosilanverbindungen sowie Verfahren zu ihrer Herstellung.

Für verschiedene Einsatzzwecke ist das Eigenschaftsniveau olefinischer Polymerer, wie z. B. Polyethylen (PE), Polypropylen (PP) , Polybuten-1 (PB), Poly-4-methylpenten (PMP), Polystyren (PS) und der entsprechenden Copolymeren nicht ausreichend. Insbesondere Festigkeit, Zähigkeit, Wärmeformbeständigkeit und Beständigkeit gegenüber verschiedenen Chemikalien bei diesen Polymeren genügen vielen Anforderungen aus dem Bereich der Konstruktionsteilherstellung nicht.

Durch Einbringen von kovalenten Brückenbindungen zwischen den Polymerketten über Kettenverzweigungen und Vernetzungen kann das Eigenschaftsspektrum dieser Polymerer ausgedehnt werden. So bewirkt beispielsweise die Vernetzung von PE, daß Zähigkeit und Wärmeformbeständigkeit gegenüber dem ursprünglichen Material erhöht werden und die Beständigkeit gegen Chemikalien verbessert wird. Für einige Anwendungen ist auch eine Teilvernetzung des Polymeren ausreichend bzw. vorteilhaft, so z. B. wenn eine höhere Schmelzviskosität benötigt wird.

Die kovalente Brückenbildung zwischen Ketten olefinischer Polymerer wird nach dem bekannten Stand der Technik zum einen über radikalische Verknüpfungsreaktionen erreicht. Dabei kann die Verknüpfung durch Kombination zweier Kettenradikale, die durch Reaktion mit Radikalen zerfallener Peroxide bzw. Azoverbindungen oder durch Einwirkung energiereicher Strahlung entstanden sind, erfolgen und/oder durch Reaktion der Kettenradikale mit zweifach oder mehrfach ungesättigten organischen Verbindungen wie Divinylbenzol, Phenylbismaleinimid oder Pentaerythritoltetraallylether. Letztere sind als gebräuchliche Vernetzungscoagenzien bekannt.

Eine weitere Variante der kovalenten Verknüpfung sind Kondensationen zwischen funktionellen Gruppen des Polymeren, die entweder als Comonomer in der Polymerkette eingebaut vorliegen oder durch Pfropfreaktionen an die Polymerkette gebunden wurden. PE kann beispielsweise durch radikalische Pfropfung mit Vinyltrialkoxysilanen funktionalisiert werden. Durch einen anschließenden katalysierten Hydrolyseschritt und katalysierte Kondensation wird das PE über Siloxanbrücken vernetzt [Plastics and Rubber Processing and Applications 13 (1990) 81-91].

Die Pfropfung von olefinischen Polymeren mit ethylenisch ungesättigten Organosilanverbindungen erfolgt entsprechend dem Stand der Technik unter Zusatz von thermisch zerfallenden Radikalbildnern oder unter Einwirkung ionisierender Strahlung. Die Reaktion kann dabei in inerten Lösungsmitteln, in der Schmelze oder im partikelförmigen, festen Polymer ablaufen. Die Pfropfung in Lösung ist sehr aufwendig und hat keine wirtschaftliche Bedeutung erlangt.

Das Verfahren der Pfropfung von Organosilanverbindungen auf Polyolefine in der Schmelze zur Herstellung von über aufgepfropfte Organosilanverbindungen vernetzbaren Polyolefinen wird in Gegenwart von Peroxiden als thermisch zerfallende Radikalbildner technisch nur bei Polyethylen und Ethylen-Copolymeren genutzt, besitzt aber Nachteile wegen verschiedener Nebenreaktionen. So erfolgt bei der radikalischen Silanpfropfung von Polyethylen in Schmelze bereits die Ausbildung vernetzter Anteile durch Kombination von PE-Kettenradikalen, was sich störend auf die Verarbeitung auswirken kann (erniedrigter Schmelzindex). Eine direkte Übertragung dieses Verfahrens auf Polypropylen scheitert daran, daß auf Grund der tertiären C-Atome in der Molekülstruktur des Polypropylens bei höheren Temperaturen eine β-Kettenspaltung auftritt (Fritz, H., Polymerwerkstoffe Merseburg 1994, 23-32 ) und der peroxidisch initiierte Kettenabbau des Polypropylens gegenüber der peroxidischen Pfropfung der Organosilanverbindung überwiegt ( Ambrosh, I., "Polypropylen", Verlag Khimiya Moskau 1967, S.126 ). Nachteilig wirkt sich auch die bei Schmelzepfropfreaktionen häufig auftretende Verfärbung der Polymeren aus.

Bei der Schmelzepfropfung erfolgt nach DE 2617108 in der 1. Verfahrensstufe die Diffusion der ethylenisch ungesättigten Organosilanverbindung, des Radikalbildners und weiterer Zusatzstoffe unter intensiver Durchmischung der Komponenten bei 60 bis 100°C. Die durch den Radikalbildner initiierte Pfropfung der ethylenisch ungesättigten Organosilanverbindung findet in einer 2. Verfahrensstufe im Extruder bei 180 bis 220°C statt.

Nicht immer werden die Diffusion der ethylenisch ungesättigten Organosilanverbindung und des Peroxids als getrennte Verfahrensstufen ausgeführt.

Nach J5434799 werden bei einem Einstufen-Extruderverfahren ethylenisch ungesättigte Organosilanverbindung und Peroxid gleichzeitig mit dem olefinischen Polymer in den Extruder dosiert und die radikalische Pfropfung unter Aufschmelzen des olefinischen Polymers, Mischung der Komponenten und Temperaturerhöhung initiiert.

Diese Technologie nach DE 2617108 und J5434799 hat infolge der nicht hinreichenden Homogenisierung von olefinischem Polymer, ethylenisch ungesättigter Organosilanverbindung und Radikalbildner den Nachteil, daß in lokalen Bereichen Vernetzung erfolgt und daraus Schwierigkeiten bei der Verarbeitung resultieren.

Weiterhin kann bei Reaktionstemperaturen oberhalb 200°C bei der durch Peroxide initiierten Pfropfung von Organosilanverbindungen ein thermooxidativer Abbau der olefinischen Polymere nicht ausgeschlossen werden, ein Zusatz von Stabilisatoren bewirkt eine Abnahme des Pfropfgrads der Organosilanverbindung (Voight, I., "Licht- und Wärmestabilisierung von synthetischen Polymeren", Verlag Khimiya Moskau 1972, S.59 ).

Ein zusätzliches Problem bilden die bei der Zersetzung einer Reihe von Peroxiden gebildeten hochtoxischen Spaltprodukte, die ebenfalls in den Finalerzeugnissen zu einem Abfall der dielektrischen Eigenschaften führen.

Die Pfropfung von ethylenisch ungesättigten Monomeren, eingeschlossen ethylenisch ungesättigte Organosilanverbindungen, auf olefinische Polymere in fester Phase in Gegenwart thermisch zerfallender Radikalbildner oder unter Einwirkung ionisierender Strahlung (γ-Strahlung, Röntgenstrahlung, beschleunigte Elektronen) ist ebenfalls bekannt.

Bei der Pfropfung olefinischer Polymerer in Gegenwart von thermisch zerfallenden Radikalbildnern in fester Phase werden partikelförmige olefinische Polymere mit ethylenisch ungesättigten Monomeren und thermisch zerfallenden Radikalbildnern in einem oder mehreren Schritten miteinander gemischt, auf eine bestimmte Reaktionstemperatur erhitzt und zu Pfropfcopolymeren umgesetzt ( DE 41 23 972, DD 135 622, DD 131 752, DD 135 621 ).

Auch bei Pfropfverfahren in fester Phase können die oben vorbenannten unerwünschten Nebenreaktionen auftreten. In US 45 95 726 wird auf die dabei ablaufende Polypropylendegradierung verwiesen, die sich in einer Erhöhung des Schmelzindex bemerkbar macht. Als Nebenerscheinung werden dabei auch die Homopolymerisation der eingesetzten ethylenisch ungesättigten Monomeren genannt. Homopolymere können auch an der Oberfläche der zu pfropfenden Polymerpartikel entstehen und Agglomeration der festen Partikel verursachen, wodurch die Rieselfähigkeit beeinträchtigt wird. Die Folge sind Anbackungen an der Reaktorwand und unerwünschte Agglomerate. Ein weiterer Nachteil besteht darin, daß die Pfropfung von ethylenisch ungesättigten Monomeren nicht gleichmäßig über den Partikelquerschnitt stattfindet.

Bei der Pfropfung olefinischer Polymerer unter Einwirkung ionisierender Strahlung in fester Phase wurden nach EP 437 808 Vinylmonomere wie Styren, Butylmethacrylat, Butylacrylat und Benzylmethacrylat auf Polyolefine, einschließlich Polypropylen, nach der "Vorbestrahlungsmethode" gepfropft, wobei Polyolefinpulver oder Polyolefingranulate bei 10 bis 85°C einer Vorbestrahlung unter inerten Bedingungen bei Bestrahlungsdosen von 1 bis 12 Mrd unterzogen wurden und nachfolgend die Pfropfung durch Kontaktierung mit dem flüssigen Monomer bzw. der Monomerlösung bei 10 bis 50°C erfolgte.

Bei der Vorbestrahlungsmethode werden die Polymerradikale im Gesamtvolumen der Polymerpartikel gebildet, diese Polymerradikale bilden den Ausgangspunkt für die nachfolgende Aufpfropfung der ethylenisch ungesättigten Monomeren. Das Verfahren wird zur Verbesserung der Adhäsionseigenschaften, der Anfärbbarkeit und der Erzielung von Ionenaustausch-Eigenschaften von olefinischen Polymeren genutzt.

Nach EP 437 808 wird durch den Ausschluß von Sauerstoff bei der Bestrahlung von olefinischen Polymeren der Polymerabbau verhindert, dabei können aber nach der Vorbestrahlungsmethode mit guten Ausbeuten lediglich sehr reaktionsfähige ethylenisch ungesättigte Monomere wie Styren oder Acrylate gepfropft werden.

Reaktionsträge ethylenisch ungesättigte Monomere wie Vinylsilane lassen sich nach der Vorbestrahlungsmethode nicht pfropfen.

DT 135 499 beschreibt die Pfropfung von olefinischen Polymeren, eingeschlossen Polypropylen, in Wirbelschicht nach der Vorbestrahlungsmethode und nach der Simultanbestrahlungsmethode (Vorsorption). Bei Polypropylen erfolgte bei Einsatz von Vinylsilanen lediglich eine Oberflächenpfropfung, die Pfropfgrade waren zu niedrig, um eine Vernetzbarkeit des Polypropylens durch Feuchtigkeit zu erzielen.

In DE 24 39 514 wird die Herstellung vernetzbarer Polyethylen-Hochspannungskabel durch Vorsorption des Vinylsilans in Polyethylen in einem Spezialmischer und kontinuierliche Bestrahlung des Kabels bei Raumtemperatur beschrieben, der Abbau des Polyethylens durch Bestrahlung unter diesen Bedingungen war gering.

Die Aufgabe der vorliegenden Erfindung bestand in der Entwicklung von vernetzbaren olefinischen Polymeren, die die beschriebenen Nachteile bekannter vernetzbarer olefinischer Polymerer wie Inhomogenitäten und unerwünschte Nebenprodukte im Modifizierungsprodukt, die sich gewöhnlich in einer Verschlechterung der Gebrauchseigenschaften bemerkbar machen, vermeiden, sowie in der Entwicklung von Verfahren zu ihrer Herstellung.

Die Aufgabe wurde durch vernetzbare olefinische Polymere aus olefinischen Polymeren, ethylenisch ungesättigten Organosilanverbindungen, weiteren Zusatzstoffen und gegebenenfalls weiteren ethylenisch ungesättigten Monomeren, gesättigten Organosilanverbindungen und Verdünnungsmitteln gelöst, wobei die erfindungsgemäßen vernetzbaren olefinischen Polymeren nach einem Verfahren hergestellt worden sind, bei dem Mischungen aus

a) 100 Gew.Teilen olefinischen Polymeren,
b) 0,05 bis 10 Gew. Teilen ethylenisch ungesättigten Organosilanverbindungen, bevorzugt Organosilanverbindungen der Formel $XY_{3-n}SiR_n$, in der X eine pfropffähige ethylenisch ungesättigte Gruppe, Y Alkyl und/oder Aryl und R eine $C_1$ bis $C_8$-Alkoxy- und/oder Carboxygruppe und/oder Halogen darstellt, und n für die Zahlen 1, 2 oder 3 steht,
c) 0 bis 10 Gew.Teilen weiteren ethylenisch ungesättigten Monomeren,
d) 0 bis 10 Gew. Teilen gesättigten Organosilanverbindungen, bevorzugt Organosilanverbindungen der Formel $Z_{4-n}SiR_n$, in der Z eine Epoxyalkyl-, Glycidoxyalkyl-, Mercaptoalkyl-, Aminoalkyl- und/oder Isocyanatoalkyl - Gruppe darstellt und R eine $C_1$- bis $C_8$- Alkoxy- und/oder Acetoxygruppe und/oder Halogen darstellt und n für die Zahlen 1, 2 oder 3 steht,
e) 0,01 bis 45 Gew.Teilen an weiteren Zusatzstoffen

A) unter Zusatz von 0,01 bis 5 Masse%, bezogen auf die eingesetzten olefinischen Polymere, an Acylperoxiden, Alkylperoxiden, Hydroperoxiden, Ketonperoxiden, Perestern, Peroxidicarbonaten, Peroxiketalen, Azoverbindungen und/oder Azonitrilen als thermisch zerfallende Radikalbildner unter Inertbedingungen in einer ersten Stufe auf eine Temperatur $T_1$ erhitzt wird, die 30 bis 110°C unterhalb der Erweichungstemperatur bzw. des Kristallitschmelzpunkts der eingesetzten Polymeren liegt, und in einer zweiten Stufe auf eine Reaktionstemperatur $T_2>T_1$ erhitzt wird, die 10 bis 60°C unterhalb der Erweichungstemperatur bzw. des Kristallitschmelzpunkts der eingesetzten Polymeren liegt, oder

B) unter Zusatz von 0 bis 40 Masse% an inerten Verdünnungsmitteln einer ionisierenden Bestrahlung bei Bestrahlungsdosen im Bereich von 0.01 bis 1,0 Mrd und Temperaturen im Bereich von 5 bis 110°C unterhalb der Erweichungstemperatur bzw. des Kristallitschmelzpunkts der eingesetzten Polymeren unterzogen werden, wobei die Prozeßbedingungen für die Herstellung der vernetzbaren olefinischen Polymeren zweckmäßig nach der Beziehung

$$M = K \left[ T_{ME} + 80 - T_P / T_{ME} - T_p \right] \times \log ( 1 + 5,2 \, D ) \times 100$$

M= Masseanteil an aufgepfropften ethylenisch ungesättigten Organosilanverbindungen bzw. an aufgepfropften ethylenisch ungesättigten Organosilanverbindungen und weiteren ethylenisch ungesättigten Verbindungen (in Masse%),

K= Empirischer Faktor, der durch die Art der ethylenisch ungesättigten Verbindungen und deren Sorptionskinetik bestimmt wird,

$T_{ME}=$ Erweichungstemperatur bzw. des Kristallitschmelzprunkts der eingesetzten Polymeren

$T_P=$ Prozeßtemperatur (in °C),

D= Absorbierte Dosis der ionisierenden Strahlung (in Mrd)

eingestellt werden.

Für Propylenpolymere ($T_{ME}$ rd. 160°C) vereinfacht sich die vorgenannte Beziehung zu

$$M = K [ 240 - T / 160 - T ] \times \log ( 1 + 5,2 \, D ) \times 100$$

M= Masseanteil an aufgepfropften ethylenisch ungesättigten Organosilanverbindungen bzw. an aufgepfropften ethylenisch ungesättigten Organosilanverbindungen und weiteren ethylenisch ungesättigten Verbindungen (in Masse%),

K= Empirischer Faktor, der durch die Art der ethylenisch ungesättigten Verbindungen und deren Sorptionskinetik bestimmt wird,

T= Prozeßtemperatur (in °C),

D= Absorbierte Dosis der ionisierenden Strahlung (in Mrd).

Der empirische Faktor K beträgt z.B. für Vinyltrimethoxysilan 1,6 und für Vinyltriethoxysilan 5,9 .

Als olefinische Polymere sind alle Polymere geeignet, die durch Polymerisation von eine oder mehrere Doppelbindungen enthaltenden Monomeren hergestellt werden können. Bevorzugt sind als olefinische Polymere Homo- und/oder Copolymere von $\alpha$-Olefinen mit 2 bis 18 C-Atomen, insbesondere lineare und/oder verzweigte Polyethylen-Homo- und/oder -Copolymere, Cycloolefin-Ethylen-Copolymere, Polypropylen-Homopolymere, statistische Propylen-Copolymere, Propylen- Blockcopolymere, statistische Propylen-Blockcopolymere, elastomere Polypropylene, isotaktisches Polybuten-1 und/oder 4-Methylpenten-1- Homo- und/oder -Copolymere, wobei die mittlere Korngröße der als Pulver, Granulate und/oder Grieße vorliegenden olefinischen Polymere 0,001 bis 7 mm, bevorzugt 0,05 bis 4 mm, beträgt.

Die ethylenisch ungesättigten Organosilanverbindungen sind bevorzugt :

- Acryloxyalkylsilane wie Acryloxypropyltrimethoxysilan, Acryloxypropyldimethylethoxysilan, Acryloxypropylmethyldiethoxysilan, Acryloxypropyltrimethoxysilan, Acryloxypropyltrismethoxyethoxysilan, Trimethylsiloxyethylacrylat, Acryloxypropyldimethylchlorsilan und/oder Acryloxypropyltrichlorsilan,

- Alkenylalkoxysilane wie Allyltriethoxysilan, Allyltrimethoxysilan, Octenyltrimethoxysilan, Propenyltriethoxysilan und/oder Propenyltrimethoxysilan,

- Alkenylhalogensilane wie Allylmethyldichlorsilan, Allyldimethylchlorsilan, Hexenyldimethylchlorsilan, Methylcyclohexenylethyldichlorsilan, Allyltrichlorsilan, Hexenyltrichlorsilan, Octenyltrichlorsilan, Propenyltrichlorsilan und/oder Tetradecenyltrichlorsilan,

- Aminoalkenylsilane wie Aminobutenyltriethoxysilan und/oder Aminoethylallyldimethoxysilan,

- Aminovinylsilane wie Aminoethyldiethoxyvinylsilan, Aminoethyldimethoxyvinylsilan und/oder Aminophenylvinyltrimethoxysilan,

- Cycloalkenylsilane wie Cyclohexenyltriethoxysilan, Triethoxysilylbicyclohepten, Cyclohexenylethyltrimethoxysilan, Cyclohexenylethyldimethylchlorsilan, Trichlorsilylethylcyclohexen und/oder Cyclohexenyltrichlorsilan,

- Methacryloxyalkylsilane wie Methacryloxypropyltrimethoxysilan, Methacryloxypropyldimethylethoxysilan, Methacryloxypropylmethyldiethoxysilan, Methacryloxypropyltriethoxysilan, Methacryloxypropyltrismethoxyethoxysilan, Trimethylsiloxyethylmethacrylat, Methacryloxypropyldimethylchlorsilan und/oder Methacryloxypropyltrichlorsilan,

- Vinylalkoxysilane wie Vinyltributoxysilan, Vinyltriethoxysilan, Vinyltriisopropoxysilan, Vinyltrimethoxysilan, Vinyltrismethoxyethoxysilan, Vinyltristrimethoxysiloxysilan, Vinyldimethylethoxysilan, Vinyldimethylmethoxysilan, Vinylethyldiethoxysilan, Vinylmethyldiethoxysilan, Phenylvinyltrimethoxysilan, Diphenylvinylethoxysilan, Vinylphenyldiethoxysilan , Vinylphenyldimethoxysilan und/oder Vinylphenylmethylmethoxysilan,

- Vinylhalogensilane wie Vinylethyldichlorsilan, Vinylmethyldichlorsilan, Diphenylvinylchlorsilan, Phenylvinyldichlorsilan, Vinyldimethylchlorsilan und/oder Vinyltrichlorsilan,

- Vinylcarboxysilane wie Vinylmethyldiacetoxysilan und oder Vinyltriacetoxysilan,

- Mischungen dieser ethylenisch ungesättigten Organosilanverbindungen.

Als weitere ethylenisch ungesättigte Monomere werden bevorzugt :

- Monovinylverbindungen wie Diethylenglycolmonovinylether, Ethylvinylacetat, Ethylvinylether, Ethylvinylpyridin, Methylvinylacetat, Methylvinylether, Methylvinylpyridin, Vinylacetat, Vinylacetoxymethylketon, Vinyladipat, Vinylbutylether, Vinylbutylketon, Vinylbutyrat, Vinylcarbazol, Vinylcyanoacetat, Vinyldodecylether, Vinylether, Vinylethylether, Vinylethylenglycolglycidylether, Vinylethylhexylether, Vinylethylketon, Vinylformat, Vinylfuran, Vinylhexylether, Vinylimidazol, Vinylisobutylether, Vinylisocyanat, Vinylisopropylether, Vinylisopropylketon, Vinyllaurat, Vinylmethylether, Vinylmethylketon , Vinyloctadecylether, Vinyloctylether, N-Vinyloxazolidon, Vinylpelargonat, 5-Vinylpicolin, Vinylpropionat, N-Vinylpyridin, N-Vinylpyrrolidon und/oder Vinylstearat;

- Divinylverbindungen wie Diethylenglycoldivinylether, Divinylpentan und/oder Divinylpropan;

- Allylverbindungen wie Allylacetat, Allylalkohol , 3-Allyl-1-buten, Allylbutylether, Allylcyanurat, Allylcyclohexan, Allyldiethylketon, Allylepoxypropylether, Allylethylether, Allylglycidylether, Allylheptanoat, Allylhexanoat, Allylmethacrylat, Allylmethylether, Allylmethylmaleat, Allyloxy-2,3-propandiol, N-Allylstearamid und/oder Allylvinylether;

- (Meth)acrylsäure und (Meth)acrylsäurederivate wie (Meth)acrylamid, (Meth)acrylnitril, Benzyl(meth)acrylat, Butyl(meth)acrylat, Cyclohexyl(meth)acrylat, N,N - Dimethyl(meth)acrylamid, Dodecyl(meth)acrylat, Ethyl(meth)acrylat, 2-Ethylhexyl(meth)acrylat, 2-Ethoxyethyl(meth)acrylat, Glycidyl(meth)acrylat, Hydroryethyl(meth)acrylat, Isopropyl(meth)acrylat, 2-Methoxyethyl(meth)acrylat, 4-Methoxybenzyl(meth)acrylat, Methyl(meth)acrylat, Natrium(meth)acrylat, N-tert.butoxycarbonyl-2-aminoethyl(meth)acrylat, Octyl(meth)acrylat, n-Propyl(meth)acrylat und/oder Tetrahydrofurfuryl(meth)acrylat;

- Ungesättigte Dicarbonsäureanhydride wie Citraconsäureanhydrid, Fumarsäureanhydrid, Itakonsäureanhydrid und/oder Maleinsäureanhydrid;

- Diene wie Butadien, Butadien-1-carbonsäure, Chloropren, Cyclohexadien-1,3, Cyclohexadien-1,5, Cyclopentadien, 2,3-Dimethylbutadien, 1-Ethoxybutadien, 1,4-Heptadien, 1,4-Hexadien, 1,6-Hexadien, Isopren, Norbornadien, und/oder 1,4-Pentadien ;

- Mischungen dieser weiteren ethylenisch ungesättigten Monomeren.

Bevorzugte Beispiele für gesättigte Organosilanverbindungen sind Epoxyalkylsilane, Glycidoxyalkylsilane, Aminoalkylsilane, Ureidoalkylsilane und/oder Isocyanatoalkylsilane, insbesondere Glycidoxypropyltrimethoxysilan und/oder Glycidoxypropyltriethoxysilan.

Die weiteren Zusatzstoffe sind bevorzugt 0,01 bis 2,5 Gew.Teile Stabilisatoren, 0,1 bis 1 Gew.Teile Antistatika, 0,2 bis 3 Gew.Teile Pigmente , o,o5 bis 1 Gew.Teile Nukleierungsmittel , 5 bis 4o Gew.Teile Füll- und/oder Verstärkerstoffe, 5 bis 2o Gew.Teile elastifizierende Zusatzstoffe, 2 bis 2o Gew.Teile Flammschutzmittel, o,5 bis 1o Gew.Teile Lösungsmittel und/oder o,o1 bis 1 Gew.Teile, jeweils bezogen auf die olefinischen Polymeren, Verarbeitungshilfsmittel.

Die Stabilisatoren sind bevorzugt Mischungen aus 0,01 bis 0,6 Masse% phenolischen Antioxidantien, 0,01 bis 0,6 Masse% Verarbeitungsstabilisatoren auf Basis von Phosphiten , 0,01 bis 0,6 Masse% Hochtemperaturstabilisatoren auf Basis von Disulfiden und Thioäthern und 0,01 bis 0,8 Masse% sterisch gehinderten Aminen (HALS).

Geeignete phenolische Antioxidantien sind 2-tert.Butyl-4,6-dimethyl-phenol, 2,6-Di-tert.butyl-4-methylphenol, 2,6-Di-tert.butyl-4-isoamylphenol, 2,6,-Di-tert.butyl-4-ethylphenol, 2-tert.Butyl-4,6-diisopropylphenol, 2,6-Dicyclopentyl-4-methylphenol, 2,6-Di-tert.butyl-4-methoxymethylphenol, 2-tert.Butyl-4,6-dioctadecylphenol, 2,5-Di-tert.butylhydrochinon, 2,6-Di-tert.butyl-4,4-hexadecyloxyphenol, 2,2'-Methylen-bis(6-tert.butyl-4-methylphenol), 4,4'-Thio-bis-(6-tert.butyl-2-methylphenol), 3(3,5-Di-tert.butyl-4-hydroxyphenyl)propionsäureoctadecylester, 1,3,5-Trimethyl-2,4,6-tris-(3',5'di-tert.butyl-4-hydroxybenzyl)benzen und/oder Pentaerythritol-tetrakis[3-(3,5-di-tert.butyl-4-hydroxyphenyl)]propionat.

Als HALS-Verbindungen sind Bis-2,2,6,6 tetramethyl-4-piperidylsebazat und/oder Poly - ([1,1,3,3 - tetramethylbutyl)-imino] -1,3,5 - triazin-2,4,diyl)[2,2,6,6,-tetramethyl-piperidyl)-amino]hexamethylen-4-(2,2,6,6-tetra-methyl)piperidyl)-imino] besonders geeignet.

Bevorzugte Verarbeitungshilfsmittel sind Calciumstearat, Magnesiumstearat und/oder Wachse.

Als elastifizierend wirkende Zusatzstoffe sind siloxanendständige Oligosiloxane, thermoplastische Polyurethane, Polyoxyethylene, Polyoxypropylene oder Mischungen aus diesen Polymeren geeignet.

Geeignete Füll-und/oder Verstärkungsstoffe sind Talkum, Kreide, Glimmer, Wollastonit, Glas-, Kohle-, Aramid- oder Keramikfasern, weitere synthetische Fasern oder Cellulosefasern.

Die vernetzbaren olefinischen Polymere aus olefinischen Polymeren, ethylenisch ungesättigten Organosilanverbindungen, weiteren Zusatzstoffen und gegebenenfalls weiteren ethylenisch ungesättigten Monomeren, gesättigten Organosilanverbindungen und Verdünnungsmitteln werden erfindungsgemäß nach einem Verfahren hergestellt, bei dem Mischungen aus

a) 100 Gew.Teilen olefinischen Polymeren,
b) 0,05 bis 10 Gew. Teilen ethylenisch ungesättigten Organosilanverbindungen, bevorzugt Organosilanverbindungen der Formel $XY_{3-n}SiR_n$, in der X eine pfropffähige ethylenisch ungesättigte Gruppe, Y Alkyl und/oder Aryl und R eine $C_1$ bis $C_8$-Alkoxy- und/oder Carboxygruppe und/oder Halogen darstellt, und n für die Zahlen 1, 2 oder 3 steht,
c) 0 bis 10 Gew.Teilen weiteren ethylenisch ungesättigten Monomeren,
d) 0 bis 10 Gew. Teilen gesättigten Organosilanverbindungen, bevortugt Organosilanverbindungen der Formel $Z_{4-n}SiR_n$, in der Z eine Epoxyalkyl-, Glycidoxyalkyl-, Mercaptoalkyl-, Aminoalkyl- und/oder Isocyanatoalkyl - Gruppe darstellt und R eine $C_{1-}$ bis $C_8$- Alkoxy- und/oder Acetoxygruppe und/oder Halogen darstellt und n für die Zahlen 1, 2 oder 3 steht,
e) 0,01 bis 45 Gew.Teilen an weiteren Zusatzstoffen

unter Zusatz von 0,01 bis 5 Masse%, bezogen auf die eingesetzten olefinischen Polymeren, an Acylperoxiden, Alkylperoxiden, Hydroperoxiden, Ketonperoxiden, Perestern, Peroxidicarbonaten, Peroxiketalen, Azoverbindungen und/oder Azonitrilen als thermisch zerfallende Radikalbildner unter Inertbedingungen in einer ersten Stufe auf eine Temperatur $T_1$ erhitzt werden, die 30 bis 110°C, bevorzugt 10 bis 25°C, unterhalb der Erweichungstemperatur bzw. des Kristallitschmelzpunkts der eingesetzten Polymeren liegt und wobei bei einer Verweilzeit von 1 bis 24o Min., bevorzugt 2o bis 5o min, weniger als 5 Masse% des verwendeten thermisch zerfallenden Radikalbildners zerfallen dürfen, und bei dem die Mischungen in einer zweiten Stufe auf eine Reaktionstemperatur $T_2 > T_1$ erhitzt werden, die 10 bis 60°C, bevorzugt 5 bis 18°C, unterhalb der Erweichungstemperatur bzw. des Kristallitschmelzpunkts der eingesetzten Polymeren liegt und bei dem die Halbwertszeit des Zerfalls des verwendeten thermisch zerfallenden Radikalbildners höchstens 60 min. und die Reaktionszeit mindestens 6 Halbwertszeiten des Zerfalls des verwendeten thermisch zerfallenden Radikalbildners beträgt.

Die olefinischen Polymere werden als Partikel in der festen Phase eingesetzt und liegen bevorzugt als Pulver, Granulate oder Grieße vor. Die bevorzugte Korngröße liegt dabei im Bereich von o,oo1 bis 7 mm, besonders bevorzugt bei o,o5 bis 4 mm. Besonders vorteilhaft erweist es sich, direkt aus der Polymerisationsanlage kommende Polyolefinpartikel zu modifizieren.

Eine besondere Verfahrensvariante bildet der Einsatz von Aminosilanen als gesättigte Organosilanverbindungen

EP 0 821 018 A2

und von ungesättigten Carbonsäureanhydriden als weitere ethylenisch ungesättigte Monomere. Beide Komponenten werden bevorzugt im Molverhältnis 1:1 eingesetzt.

Zur Verbesserung der Dispergierbarkeit der Reaktionskomponenten und zur Erzielung einer Quellung der olefinischen Polymeren können der Mischung als weitere Zusatzstoffe 0,5 bis 10 Gew.Teile organische Lösungsmittel als Lösungsmittel für Monomere und Radikalbildner und Quellmittel für die olefinischen Polymeren zugesetzt werden. Geeignete Lösungsmittel bzw. Quellmittel sind bevorzugt Toluol, Chlorbenzol, Aceton, Methanol, Ethanol, Methylethylketon, Ether und/oder Dioxan.

Die bei dem erfindungsgemäßen Verfahren eingesetzten thermisch zerfallenden Radikalbildner sind :

- Acylperoxide wie Acetylbenzoylperoxid, Benzoylperoxid, 4-Chlorbenzoylperoxid, Dinitrobenzoylperoxid, 3-Methoxybenzoylperoxid und/oder Methylbenzoylperoxid;

- Alkylperoxide wie Allyl-tert.butylperoxid, 2,2-Bis-(tert.butylperoxybutan), 1,1-Bis-(tert.butylper-oxi-)-3,3,5-trimethylcyclohexan, Diisopropylaminomethyltert.amylperoxid, Dimethylaminomethyl-tert.amylperoxid, Diethylaminomethyl-tert.butylperoxid, Dimethylaminomethyl-tert.butylperoxid, 1.1-Di-(tert.amylperoxi)-cyclohexan, tert. Amylperoxid, tert.Butylcumylperoxid, tert.Butylperoxid und/oder 1-Hydroxy-butyl-n-butylperoxid

- Hydroperoxide wie Decalinhydroperoxid und/oder Tetralinhydroperoxid;

- Ketonperoxide wie Methylethylketonhydroperoxid;

- Peroxiketale wie 1.1-Di-tert.butylperoxy-3,3,5-trimethylcyclohexan;

- Perester und Peroxicarbonate wie Butylperacetat, Cumylperacetat, Cumylperpropionat, Cyclohexylperacetat, Di-tert.butylperadipat, Di-tert.butylperazelat, Di-tert.butylperglutarat, Di-tert.butylperphthalat, Di-tert.butylpersebazat, 4-Nitrocumylperpropionat, 1-Phenylethylperbenzoat, Phenylethylnitroperbenzoat, tert. Butylbicyclo-(2,2,1)heptanpercarboxylat, tert.Butyl-4-carbomethoxyperbutyrat, tert.Butylcyclobutanpercarboxylat, tert.Butylcyclo-hexylperoxycarboxylat, tert.Butylcyclopentylpercarboxylat, tert.Butylcyclopropanpercarboxylat, tert.Butyldimethylpercinnamat, tert.Butyl-2-(2,2-diphenylvinyl)-perbenzoat, tert.Butyl-4-methoxyperbenzoat, tert.Butylperbenzoat, tert.Butylcarboxicyclohexan, tert.Butylpernaphthoat, tert.Butylperoxiisopropylcarbonat, tert.Butylpertoluat, tert. Butyl-1-phenylcyclopropylpercarboxylat, tert.Butyl-2-propylperpenten-2-oat, tert.Butyl-1-methylcypropylpercarboxylat, tert.Butyl-4-nitrophenylperacetat, tert.Butylnitrophenylperoxycarbamat, tert.Butyl-N-succinimidopercarboxylat, tert.Butylpercrotonat, tert.Butylpermaleinsäure, tert.Butylpermethacrylat, tert.Butylperoctoat, tert.Butylperoxyisopropylcarbonat, tert.Butylperisobutyrat, tert.Butylperacrylat und/oder tert.Butylperpropionat;

- Azonitrile wie 2-Cyano-2-propylazoformamid, 2,2'-Azo-bis-2-methylpropionitril, 1,1'-Azo-bis-cyclopentannitril, 1,1'-Azo.bis-cyclohexannitril und/oder 2,2'-Azo-bis-cyclohexylpropionitril;

- Azoverbindungen wie 2,2'-Azo-bis-methyl-2-methylpropionat, Azo-bis-(N,N'-diethylenisobutyramidin), 1,1'-Azo-bis-1-phenylethan und/oder 1,1'-Azo-bis-1-phenylpropan;

- Gemische dieser Radikalbildner.

Die Inertbedingungen werden durch Einsatz inerter Gasen wie Stickstoff oder Argon bei der Reaktionsführung erzielt.

In Abhängigkeit von den gewählten Verfahrensbedingungen erfolgt das Erhitzen auf der 1.Temperaturstufe 1 bis 240 min, bevorzugt 20 bis 50 min, und auf der 2. Temperaturstufe mindestens 6 Halbwertszeiten des Zerfalls des verwendeten thermisch zerfallenden Radikalbildners, dies sind in Abhängigkeit von der Zerfallscharakteristik des benutzten Radikalbildners 5 bis 180 min, bevorzugt 10 bis 90 min, besonders bevorzugt 30 bis 60 min.

Zweckmäßige Reaktionstemperaturen sind für $T_1$ 30 bis 50°C und die Temperatur $T_2$ 10 bis 30°C unterhalb der Erweichungstemperatur bzw. des Kristallitschmelzpunktes.

Ein weiteres Verfahren zur Herstellung vernetzbarer olefinischer Polymerer aus olefinischen Polymeren, ethylenisch ungesättigten Organosilanverbindungen, weiteren Zusatzstoffen und gegebenenfalls weiteren ethylenisch ungesättigten Monomeren, gesättigten Organosilanverbindungen und Verdünnungsmitteln besteht erfindungsgemäß darin, daß Mischungen aus

a) 100 Gew.Teilen olefinischen Polymeren,
b) 0,05 bis 10 Gew. Teilen ethylenisch ungesättigten Organosilanverbindungen, bevorzugt Organosilanverbindun-

gen der Formel $XY_{3-n}SiR_n$, in der X eine pfropffähige ethylenisch ungesättigte Gruppe, Y Alkyl und/oder Aryl und R eine $C_1$ bis $C_8$-Alkoxy- und/oder Carboxygruppe und/oder Halogen darstellt, und n für die Zahlen 1, 2 oder 3 steht,

c) 0 bis 10 Gew.Teilen weiteren ethylenisch ungesättigten Monomeren,

d) 0 bis 10 Gew. Teilen gesättigten Organosilanverbindungen, bevorzugt Organosilanverbindungen der Formel $Z_{4-n}SiR_n$, in der Z eine Epoxyalkyl-, Glycidoxyalkyl-, Mercaptoalkyl-, Aminoalkyl- und/oder Isocyanatoalkyl - Gruppe darstellt und R eine $C_{1-}$ bis $C_8$- Alkoxy- und/oder Acetoxygruppe und/oder Halogen darstellt und n für die Zahlen 1, 2 oder 3 steht,

e) 0,01 bis 45 Gew.Teilen an weiteren Zusatzstoffen

unter Zusatz von 0 bis 40 Masse% an inerten Verdünnungsmitteln einer ionisierenden Bestrahlung, die bevorzugt durch Nuklidstrahlenquellen enthaltende Bestrahlungseinrichtungen oder durch Elektronenbeschleuniger appliziert wird, bei Bestrahlungsdosen im Bereich von 0.01 bis 1,0 Mrd, bevorzugt von 0,01 bis 0,25 Mrd, und Temperaturen im Bereich von 5 bis 110°C, bevorzugt 20 bis 80°C, unterhalb der Erweichungstemperatur bzw. des Kristallitschmelzpunkts der eingesetzten Polymeren unterzogen werden, wobei die Prozeßbedingungen für die Herstellung der vernetzbaren olefinischen Polymeren zweckmäßig nach der Beziehung

$$M = K \, [T_{ME} + 80 - T_P / T_{ME} - T_p] \times \log(1 + 5{,}2\,D) \times 100$$

$M =$     Masseanteil an aufgepfropften ethylenisch ungesättigten Organosilanverbindungen bzw. an aufgepfropften ethylenisch ungesättigten Organosilanverbindungen und weiteren ethylenisch ungesättigten Verbindungen (in Masse%),

$K =$     Empirischer Faktor, der durch die Art der ethylenisch Ungesättigten Verbindungen und deren Sorptionskinetik bestimmt wird,

$T_{ME} =$     Erweichungstemperatur bzw. des Kristallitschmelzpunkts der eingesetzten Polymeren

$T_P =$     Prozeßtemperatur (in °C),

$D =$     Absorbierte Dosis der ionisierenden Strahlung (in Mrd)

eingestellt werden.

Zur Verbesserung der Dispergierbarkeit der Reaktionskomponenten können der Mischung als weitere Zusatzstoffe inerte Verdünnungsmittel wie gesättigte Kohlenwasserstoffe, Aceton, Methanol, Ethanol, Methylethylketon, Ether und/oder Dioxan zugesetzt werden.

Für die Applikation der ionisierenden Strahlung sind Nuklidbestrahlungsanlagen mit Kobalt-60 oder Cäsium-137 als Strahlenquellen geeignet. Bei hohen Produktdurchsätzen ist die Anwendung von Elektronenbeschleunigern für die Applikation der ionisierenden Strahlung vorteilhaft. Geeignet sind dabei Elektronenbeschleuniger vom Cockroft-Walton-Typ mit Energien im Bereich von 300 bis 4500 KeV sowie Linearelektronenbeschleuniger mit Energien im Bereich von 1000 bis 10000 KeV.

Besonders vorteilhaft ist eine kontinuierliche Prozeßführung, bei der das Sauerstofffreie feinteilige olefinische Polymer direkt aus der Polyolefin-Synthesestation kontinuierlich nach dem erfindungsgemäßen Verfahren die Modifizierungsstation unter gleichzeitiger Sorption und Bestrahlung durchläuft.

Eine bevorzugte Variante des erfindungsgemäßen Verfahrens zur Herstellung vernetzbarer olefinischer Polymerer unter Anwendung ionisierender Strahlung besteht darin, daß als olefinische Polymere Propylenpolymere eingesetzt werden, die ionisierende Bestrahlung bei Temperaturen von 20 bis 155°C, bevorzugt bei 80 bis 140°C, erfolgt, und die Prozeßbedingungen für die Herstellung der vernetzbaren Polypropylene zweckmäßig nach der Beziehung

$$M = K \, [\, 240 - T / 160 - T \,] \times \log(1 + 5{,}2\,D) \times 100$$

$M =$     Masseanteil an aufgepfropften ethylenisch ungesättigten Organosilanverbindungen bzw. an aufgepfropften ethylenisch ungesättigten Organosilanverbindungen und weiteren ethylenisch ungesättigten Verbindungen (in Masse%),

$K =$     Empirischer Faktor, der durch die Art der ethylenisch ungesättigten Verbindungen und deren Sorptionskinetik bestimmt wird,

$T =$     Prozeßtemperatur (in °C),

$D =$     Absorbierte Dosis der ionisierenden Strahlung (in Mrd)

eingestellt werden.

Bestrahlungstemperaturen unter 80°C führen bei dem erfindungsgemäßen Verfahren bei Einsatz von Propylenpolymeren zu einem Absinken der Pfropfausbeute. Überraschenderweise zeigte es sich, daß die ethylenisch ungesättigten Organosilanverbindungen einen stabilisierenden Einfluß auf den strahlenchemischen Abbau von Propylenpolymeren besitzen, so daß auf den Zusatz spezieller Stabilisatoren verzichtet werden kann und dadurch bei niedrigen Bestrahlungsdosen ohne Polypropylenabbau hohe Pfropfausbeuten erzielt werden. Bei Bestrahlungsdosen über 0,25 Mrd ist ein geringer Kettenabbau des Polypropylens feststellbar. Eine Bildung von Homopolymeren auf Basis der ethylenisch ungesättigten Organosilanverbindungen konnte nicht nachgewiesen werden.

Sowohl bei dem Verfahren unter Zusatz von thermisch zerfallenden Radikalbildnern als auch bei dem Verfahren unter Einwirkung ionisierender Strahlung zur Radikalerzeugung bei der Herstellung vernetzbarer olefinischer Polymerer werden die Sorption der ethylenisch ungesättigten Organosilanverbindungen und gegebenenfalls der weiteren ethylenisch ungesättigten Monomeren und gesättigten Organosilanverbindungen durch die olefinischen Polymere und die Umsetzung dieser sorbierten Reaktanden mit den olefinischen Polymeren bevorzugt bei Drucken von 0,01 bis 1 MPa, besonders bevorzugt bei Drucken von 0,05 bis 0,5 MPa, vorgenommen.

Die nach beiden erfindinngsgemäßen Verfahrensvarianten hergestellten vernetzbaren silangepfropften olefinischen Polymeren liegen als rieselfähige, nicht agglomerierte Polymerpartikel vor, die sich problemlos aus dem Reaktionsgefäß austragen lassen und keine signifikante Veränderung der Farbe und des Schmelzindex zeigen.

Die erfindungsgemäßen vernetzbaren olefinischen Polymere können nach üblichen thermoplastischen Verarbeitungsverfahren, gegebenenfalls unter Zusatz von Silanolkondensationskatalysatoren wie Dibutylzinndilaurat oder Dibutylzinndiacetat, zu vernetzbaren Halbzeugen und Formstoffen verarbeitet werden und durch Kontaktierung mit Wasser oder Wasserdampf vernetzt werden.

Die vernetzbaren olefinischen Polymere sowie Mischungen mit nichtmodifizierten olefinischen Polymeren sind bevorzugt zur Herstellung von Folien, Fasern, Platten, Beschichtungen, Rohren, Hohlkörpern, Schaumstoffen und/oder Formteilen geeignet. Der Einsatz dieser Halbzeuge und Formstoffe erfolgt insbesondere in Anwendungen, bei denen eine erhöhte Chemikalienresistenz und Wärmeschockbeständigkeit gefordert werden.

Die Erfindung wird durch nachfolgende Beispiele erläutert :

Vergleichsbeispiel 1

In einem verschließbaren Edelstahlrührgefäß mit Heizmantel und Vorrichtung zur Stickstoffspülung wurden 100 Gew.Teile Polypropylen-Homopolymerpulver mit einem mittleren Korndurchmesser von 0,4 mm und einem Schmelzindex von 2,86 g/10 min (bei 230°C/2,16 kp, entspr. DIN 53735) unter Stickstoffatmosphäre auf die Reaktionstemperatur von 110°C unter Rühren aufgeheizt und dann mit dem Flüssigkeitsgemisch, bestehend aus 1,5 Gew. Teilen Vinyltrimethoxysilan ( VTMOS) und 1,0 Gew.Teilen tert.-Butylperoxy-2-ethylhexanoat (TBPEH), unter intensiver Durchmischung des Pulverbettes versetzt. Der Reaktor wurde verschlossen und das Reaktionsgemisch 2 Stunden unter Rühren temperiert. Nach Abkühlung auf Raumtemperatur erfolgte in einem Mischer der Zusatz der Stabilisatoren Tetrakis[methylen(3,5-di-tert.butylhydroxyhydrocinnamat)]methan (0,2 Gew.Teile), Ionol (0,4 Gew.Teile) und Tris(2,4-di-tert.butylphenyl)phosphit) (0,2 Gew.Teile). Nach einer 12 - stündigen Vakuumtrocknung bei 75 °C zur Entfernung von nichtge--pfropftem Monomer erfolgte die Messung des Schmelzindex und die IR-spektroskopische Bestimmung des Silangehaltes.
Die Analysendaten der Pfropfcopolymeren nach Beispielen 1 bis 8 sind in Tabelle 1 zusammengefaßt.

Beispiel 2:

Einsatzstoffe und Mengen entsprechen Beispiel 1. In dem Edelstahlrührgefäß wird Polypropylen-Homopolymerpulver vorgelegt und der Reaktor wird durch Stickstoffspülung inertisiert. Unter Rühren des Pulverbetts erfolgt die Dosierung des Flüssigkeitsgemischs. Nach 30 Min. Rühren bei einer Temperatur von rd. 50°C wird das beladene Pulver auf die Temperatur von 110°C aufgeheizt und der Versuch wie in Beispiel 1 fortgeführt.

Vergleichsbeispiel 3 :

Einsatzstoffe wie in Beispiel 1, aber mit veränderten Mengen: Zu 100 Gew.Teilen Polypropylen-Homopolymerpulver wird ein Flüssigkeitsgemisch, bestehend aus 3,5 Gew.Teilen VTMOS und 1.0 Gew.Teilen TBPEH, dosiert. Versuchsdurchführung wie in Beispiel 2 .

Beispiel 4 :

Einsatzstoffe und Mengen wie in Beispiel 3, zusätzlich Einsatz eines Lösungsmittels. Das Flüssigkeitsgemisch enthält 3,5 Gew.Teile VTMOS, 1,0 Gew.Teile TBPEH und 4,5 Gew.Teile Aceton. Versuchsdurchführung wie in Beispiel 2.

Beispiel 5 :

Durchführung des Versuchs wie in Beispiel 2 beschrieben. Anstelle des Propylen-Homopolymers wird ein statistisches Copolymer aus 6 Mol% Ethylen und 94 Mol% Propylen mit einem Schmelzindex von 1,25g/10 Min. zur Pfropfung eingesetzt. Das Flüssigkeitsgemisch besteht aus 1,5 Gew.Teilen VTMOS, 1,0 Gew.Teilen TBPEH und 4,5 Gew.Teilen Aceton.

Beispiel 6 :

Durchführung des Versuchs wie in Beispiel 2 beschrieben. Anstelle VTMOS wird molar die analoge Menge Methacrylisopropyltrimethoxysilan (MATMOS) verwendet, d.h. zu 100 Gew.Teilen Polypropylen-Homopolymerpulver wird ein Flüssigkeitsgemisch, bestehend aus 2,51 Gew.Teilen MATMOS, 1,0 Gew.Teilen TBPEH und 4,5 Gew.Teilen Aceton, dosiert.

Beispiel 7 :

Durchführung des Versuchs wie in Beispiel 2 beschrieben. Anstelle VTMOS allein wird ein Monomergemisch aus VTMOS, $\gamma$-Aminopropyltrimethoxysilan (APTMOS) und Maleinsäureanhydrid (MSA) zur Pfropfung eingesetzt. Zu 100 Gew.Teilen Polypropylen-Homopolymerpulver wird ein Flüssigkeitsgemisch, bestehend aus 0,82 Gew.Teilen VTMOS, 0,82 Gew.Teilen APTMOS, 0,45 Gew.Teilen MSA, 1,0 Gew.Teilen TBPEH und 4,5 Gew.Teilen Aceton, dosiert.

Beispiel 8

In einem verschließbaren Edelstahlrührgefäß mit Heizmantel und Vorrichtung zur Stickstoffspülung wurden 100 Gew.Teile Polyethylen-HD-Homopolymerpulver mit einem mittleren Korndurchmesser von 0,25 mm und einem Schmelzindex von 1,2 g/10 min (bei 190°C/5kp, entspr. DIN 53735) vorgelegt und durch Stickstoffspülung inertisiert. Unter Rühren des Pulverbetts wird ein Flüssigkeitsgemisch, bestehend aus 1,5 Gew. Teilen Vinyltrimethoxysilan ( VTMOS) und 1,0 Gew.Teilen tert.-Butylperoxy-2-ethylhexanoat (TBPEH), zugesetzt und die Mischung wird nach 50 Min. intensiver Durchmischung bei 40°C auf die Reaktionstemperatur von 90°C unter Rühren aufgeheizt und das Reaktionsgemisch 6 Stunden unter Rühren temperiert. Nach Abkühlung auf Raumtemperatur erfolgte in einem Mischer der Zusatz der Stabilisatoren Tetrakis[methylen(3,5-di-tert.butylhydroxyhydrocinnamat)]methan (0,2 Gew.Teile), Ionol (0,4 Gew.Teile) und Tris(2,4-di-tert.butylphenyl)phosphit) (0,2 Gew.Teile). Nach einer 12 - stündigen Vakuumtrocknung bei 65 °C zur Entfernung von nichtgepfropftem Monomer erfolgte die Messung des Schmelzindex und die IR-spektroskopische Bestimmung des Silangehaltes.

Tabelle 1

| Analysendaten der Pfropfcopolymeren nach den Beispielen 1 bis 8 | | | |
|---|---|---|---|
| Versuch | Schmelzindex bei 230°C/2,16 kp ( g/10 Min.) | Pfropfgrad (%) | Pfropfausbeute (%) |
| Beispiel 1 | 5,1 | 0,9 | 60 |
| Beispiel 2 | 7,8 | 1,33 | 89 |
| Beispiel 3 | 5,8 | 1,69 | 48 |
| Beispiel 4 | 9,4 | 2,55 | 73 |
| Beispiel 5 | 3,2 | 1,31 | 87 |
| Beispiel 6 | 7,6 | 2,4 | 96 |
| Beispiel 7 | 7,9 | 1,1 | 87 |
| Beispiel 8 | 0,65* | 1,2 | 81 |

* MFI bei 190°C/5kp

Beispiel 9

200 g eines unstabilisierten Polypropylenpulvers (Partikeldurchmesser 50 bis 250 $\mu$m, spezifische Oberfläche 4 x $10^{-2}$ m$^2$/g, Schmelzindex 0,5 g/10 Min. bei 230°C /2,16 kp) werden in einen mit einem Heizmantel versehenen Glasreaktor überführt.

Nach Einschaltung der Heizung wird der Glasreaktor auf ein Vacuum von $10^{-1}$ mm Hg evacuiert und anschließend 10,5 ml (9,5 g) Vinyltriethoxysilan (VTEOS; K-Faktor = 5,9) in den Reaktor eingespritzt. Die Menge an eingespritztem VTEOS liegt 10 bis 15% oberhalb der erforderlichen aufzupfropfenden Menge an VTEOS entsprechend der Prozeßgleichung.

Der auf 130°C erwärmte Glasreaktor wird in die Bestrahlungskammer der Laborbestrahlungsanlage RCH-$\gamma$-30 eingebracht und mit einer Dosisleistung von o,4 Mrd/Std. bestrahlt. Nach einer Bestrahlungszeit von 15 Minuten beträgt die absorbierte Gammabestrahlungsdosis 0,1 Mrd. Wenn die absorbierte Dosis erreicht ist, wird der Reaktor aus der Bestrahlungszone entfernt, auf Raumtemperatur abgekühlt und das VTEOS - gepfropfte Polypropylen 1 Std. im Vacuum bei 140°C getrocknet, um die Spuren an nichtumgesetztem Monomer zu entfernen.

Der Anteil an gepfropftem VTEOS wurde durch Fourier-IR-Analyse mit einer Genauigkeit von $\pm$0,1% ermittelt und betrug 4,3%. Der Schmelzindex des modifizierten Polypropylens betrug 0,7 g/10 Min. bei 230$^0$C/2,16 kp.

Zur Ermittlung des durch Hydrolyse erzielbaren Gelanteils wurde eine 100$\mu$m dicke Folie durch Verpressen des modifizierten Produkts bei 180°C/8,0 MPa hergestellt und unter Zusatz von 2 bis 5 Masse% Dibutylzinndilaurat als Silanolkondensationskatalysator 20 bis 30 Std. bei 80°C hydrolysiert. Der durch Extraktion mit siedendem Xylen ermittelte Gelanteil betrug 73,2 Masse%.

Beispiel 10

200 g Polypropylen nach Beispiel 9 werden in einen mit einem Heizmantel versehenen Glasreaktor überführt. Nach Einschaltung der Heizung wird der Glasreaktor auf ein Vacuum von $10^{-1}$ mm Hg evacuiert und anschließend 5 g VTEOS (K-Faktor = 5,9) in den Reaktor eingespritzt. Die Menge an eingespritztem VTEOS liegt 10 bis 15% oberhalb der erforderlichen aufzupfropfenden Menge an VTEOS entsprechend der Prozeßgleichung.

Der auf 80°C erwärmte Glasreaktor wird in die Bestrahlungskammer der Laborbestrahlungsanlage RCH-$\gamma$-30 eingebracht und mit einer Dosisleistung von o,4 Mrd/Std. bestrahlt. Nach einer Bestrahlungszeit von 15 Minuten beträgt die absorbierte Gammabestrahlungsdosis 0,1 Mrd. Wenn die absorbierte Dosis erreicht ist, wird der Reaktor aus der Bestrahlungszone entfernt, auf Raumtemperatur abgekühlt und das VTEOS - gepfropffe Polypropylen 1 Std. im Vacuum bei 140°C getrocknet, um die Spuren an nichtumgesetztem Monomer zu entfernen. Der Anteil an gepfropftem VTEOS betrug 2,3% und der Schmelzindex des modifizierten Polypropylens 0,6 g/10 Min. bei 230°C/2,16 kp. Durch hydrolytische Kondensation wurde ein Gelanteil von 68,3% erzielt.

Beispiel 11

200 g Polypropylen nach Beispiel 9 werden in einen mit einem Heizmantel versehenen Glasreaktor überführt. Nach Einschaltung der Heizung wird der Glasreaktor auf ein Vacuum von $10^{-1}$ mm Hg evacuiert und anschließend 5,2 g VTMOS (K-Faktor = 1,6) in den Reaktor eingespritzt. Die Menge an eingespritztem VTMOS liegt 10 bis 15% oberhalb der erforderlichen aufzupfropfenden Menge an VTMOS entsprechend der Prozeßgleichung.

Der auf 130°C erwärmte Glasreaktor wird in die Bestrahlungskammer der Laborbestrahlungsanlage RGH-$\gamma$-30 eingebracht und mit einer Dosisleistung von o,4 Mrad/Std. bestrahlt. Nach einer Bestrahlungszeit von 37,5 Minuten beträgt die absorbierte Gammabestrahlungsdosis 0,25 Mrd. Wenn die absorbierte Dosis erreicht ist, wird der Reaktor aus der Bestrahlungszone entfernt, auf Raumtemperatur abgekühlt und das VTMOS - gepfropfte Polypropylen 1 Std. im Vacuum bei 140°C getrocknet, um die Spuren an nichtumgesetztem Monomer zu entfernen. Der Anteil an gepfropftem VTMOS betrug 2,4% und der Schmelzindex des modifizierten Polypropylens 1,3 g/10 Min. bei 230°C/2,16 kp. Durch hydrolytische Kondensation wurde ein Gelanteil von 70,3% erzielt.

Beispiel 12 (Vergleichsbeispiel)

200 g Polypropylen nach Beispiel 9 werden mit 0,4% Ionol stabilisiert und in einen mit einem Heizmantel versehenen Glasreaktor überführt. Nach Einschaltung der Heizung wird der Glasreaktor auf ein Vacuum von $10^{-1}$ mm Hg evacuiert und anschließend 5 g VTEOS (K-Faktor = 5,9) in den Reaktor eingespritzt.

Der auf 80°C erwärmte Glasreaktor wird in die Bestrahlungskammer der Laborbestrahlungsanlage RCH-$\gamma$-30 eingebracht und mit einer Dosisleistung von o,4 Mrd/Std. bestrahlt. Nach einer Bestrahlungszeit von 15 Minuten beträgt die absorbierte Gammabestrahlungsdosis 0,1 Mrd. Wenn die absorbierte Dosis erreicht ist, wird der Reaktor aus der Bestrahlungszone entfernt, auf Raumtemperatur abgekühlt und das VTEOS - gepfropffe Polypropylen 1 Std. im Vacuum bei 140°C getrocknet, um die Spuren an nichtumgesetztem Monomer zu entfernen. Der Anteil an gepfropftem VTEOS betrug 0,3% und der Schmelzindex des modifizierten Polypropylens 0,5 g/10 Min. bei 230°C/2,16 kp. Durch hydrolytische Kondensation ließ sich kein nachweisbarer Gelanteil erzielen.

Beispiel 13

200 g Polypropylen nach Beispiel 9 werden in einen mit einem Heizmantel versehenen Glasreaktor überführt. Nach Einschaltung der Heizung wird der Glasreaktor mehrfach mit Argon gespült und anschließend 9,5 g VTEOS (K-Faktor = 5,9) in den Reaktor eingespritzt. Die Menge an eingespritztem VTEOS liegt 10 bis 15% oberhalb der erforderlichen aufzupfropfenden Menge an VTEOS entsprechend der Prozeßgleichung. Der auf 130°C erwärmte Glasreaktor wird in die Bestrahlungskammer der Laborbestrahlungsanlage RCH-$\gamma$-30 eingebracht und mit einer Dosisleistung von o,4 Mrd/Std. bestrahlt. Nach einer Bestrahlungszeit von 15 Minuten beträgt die absorbierte Gammabestrahlungsdosis 0,1 Mrd. Wenn die absorbierte Dosis erreicht ist, wird der Reaktor aus der Bestrahlungszone entfernt, auf Raumtemperatur abgekühlt und das VTEOS - gepfropfte Polypropylen 1 Std. im Vacuum bei 140°C getrocknet, um die Spuren an nichtumgesetztem Monomer zu entfernen. Der Anteil an gepfropftem VTEOS betrug 4,3% und der Schmelzindex des modifizierten Polypropylens 0,7 g/10 Min. bei 230°C/2,16 kp. Durch hydrolytische Kondensation wurde ein Gelanteil von 73,2% erzielt.

Beispiel 14

In einen beheizbaren Edelstahlreaktor mit einem Volumen von 12 l, der in einer Gammabestrahlungsanlage vom Typ "Gammabeam" installiert ist, werden 1850 g Polypropylenpulver nach Beispiel 9 und 450 g eines unstabilisierten Polyethylenpulvers (Partikeldurchmesser 80 bis 240 $\mu$m, Dichte 0,961 g/cm$^3$, Schmelzindex 29 g/10 Min. bei 190°C/2,16 kp) überführt. Nach Einschaltung der Heizung wird der Edelstahlreaktor mehrfach mit Argon gespült und anschließend 280 g VTEOS (K-Faktor=5,9) in den Reaktor eindosiert. Die Menge an zugesetztem VTEOS liegt 10% bis 15% oberhalb der erforderlichen aufzupfropfenden Menge an VTEOS entsprechend der Prozeßgleichung. Nach Aufheizung des Edelstahlreaktors auf 130°C und Positionierung der Strahlenquellen in Bestrahlungsposition wird bei einer Dosisleistung von 0,0125 Mrd/Std. bestrahlt. Nach einer Bestrahlungszeit von 20 h beträgt die absorbierte Gammabestrahlungsdosis 0,25 Mrd. Nach Absenkung der Strahlenquellen in den Quellenkontainer wird der Edelstahlreaktor auf Raumtemperatur abgekühlt und das VTEOS -gepfropffe Polypropylen 1 Std. im Vacuum bei 14o°C getrocknet, um die Spuren an nicntumgesetztem Monomer zu entfernen. Der Anteil an gepfropftem VTEOS betrug 11,4%. Durch hydrolytische Kondensation wurde ein Gelanteil von 78% erzielt.

Beispiel 15

In einen auf 75°C beheizten 1,6 m$^3$ Kassettenreaktor mit Vibrationseinrichtung, in dessen Schmalseitenflächen die beiden Strahlaustrittsfenster der Scanner eines Elektronenbeschleunigers vom Cockroft-Walton-Typ (Energie 2500 KeV, 2 x 25 KW) integriert sind, werden kontinuierlich unter Argonatmosphäre unstabilisiertes Polypropylenpulver nach Beispiel 9 mit 450 g/s und eine Mischung aus 65 Masse% VTMOS, 5 Masse% Glycidoxypropyltrimethoxysilan (GPTMOS) und 30 Masse% Aceton mit 5,8 g/s kontinuierlich dosiert. Das modifizierte Polypropylen wird kontinuierlich ausgetragen und unter Inertbedingungen unter Zusatz von 0,30 Masse% 2,6-Di-tert.butyl-4-methoxymethylphenol, 0,15 Masse% Bis-2,2,6,6-tetra-methyl-4-piperidylsebazat und 4 Masse% Dibutylzinndilaurat , bezogen auf das modifizierte Polypropylenpulver, pneumatisch in einen Werner&Pfleiderer-Doppelschneckenextruder ZSK 120 dosiert und bei 180 bis 240°C und einer Verweilzeit von 3,5 Min. homogenisiert und granuliert. Der Anteil an gepfropftem VTMOS betrug 0,7%, die hydrolytische Kondensation ergab einen Gelanteil von 41%.

**Patentansprüche**

1. Vernetzbare olefinische Polymere aus olefinischen Polymeren, ethylenisch ungesättigten Organosilanverbindungen, weiteren Zusatzstoffen und gegebenenfalls weiteren ethylenisch ungesättigten Monomeren, gesättigten Organosilanverbindungen und Verdünnungsmitteln, dadurch gekennzeichnet, daß die vernetzbaren olefinischen Polymeren nach einem Verfahren hergestellt worden sind, bei dem Mischungen aus

   a) 100 Gew.Teilen olefinischen Polymeren,
   b) 0,05 bis 10 Gew. Teilen ethylenisch ungesättigten Organosilanverbindungen, bevorzugt Organosilanverbin-dungen der Formel $XY_{3-n}SiR_n$, in der X eine pfropffähige ethylenisch ungesättigte Gruppe, Y Alkyl und/oder Aryl und R eine $C_1$ bis $C_8$-Alkoxy- und/oder Carboxygruppe und/oder Halogen darstellt, und n für die Zahlen 1, 2 oder 3 steht,

c) 0 bis 10 Gew.Teilen weiteren ethylenisch ungesättigten Monomeren,

d) 0 bis 10 Gew. Teilen gesättigten Organosilanverbindungen, bevorzugt Organosilanverbindungen der Formel $Z_{4-n}SiR_n$, in der Z eine Epoxyalkyl-, Glycidoxyalkyl-, Mercaptoalkyl-, Aminoalkyl- und/oder Isocyanatoalkyl - Gruppe darstellt und R eine $C_1$- bis $C_8$- Alkoxy- und/oder Acetoxygruppe und/oder Halogen darstellt und n für die Zahlen 1, 2 oder 3 steht,

e) 0,01 bis 45 Gew.Teilen an weiteren Zusatzstoffen

A) unter Zusatz von 0,01 bis 5 Masse%, bezogen auf die eingesetzten olefinischen Polymere, an Acylperoxiden, Alkylperoxiden, Hydroperoxiden, Ketonperoxiden, Perestern, Peroxidicarbonaten, Peroxiketalen, Azoverbindungen und/oder Azonitrilen als thermisch zertallende Radikalbildner unter Inertbedingungen in einer ersten Stufe auf eine Temperatur $T_1$ erhitzt wird, die 30 bis 110°C unterhalb der Erweichungstemperatur bzw. des Kristallitschmelzpunkts der eingesetzten Polymeren liegt, und in einer zweiten Stufe auf eine Reaktionstemperatur $T_2>T_1$ erhitzt wird, die 10 bis 60°C unterhalb der Erweichungstemperatur bzw. des Kristallitschmelzpunkts der eingesetzten Polymeren liegt, oder

B) unter Zusatz von 0 bis 40 Masse% an inerten Verdünnungsmitteln einer ionisierenden Bestrahlung bei Bestrahlungsdosen im Bereich von 0.01 bis 1,0 Mrd und Temperaturen im Bereich von 5 bis 110°C unterhalb der Erweichungstemperatur bzw. des Kristallitschmelzpunkts der eingesetzten Polymeren unterzogen werden, wobei die Prozeßbedingungen für die Herstellung der vernetzbaren olefinischen Polymeren zweckmäßig nach der Beziehung

$$M = K \left[T_{ME} + 80 - T_P / T_{ME} - T_p\right] \times \log(1 + 5,2\,D) \times 100$$

$M=$ Masseanteil an aufgepfropften ethylenisch ungesättigten Organosilanverbindungen bzw. an aufgepfropften ethylenisch Ungesättigten Organosilanvenbindungen und weiteren ethylenisch ungesättigten Verbindungen (in Masse%),

$K=$ Empirischer Faktor, der durch die Art der ethylenisch ungesättigten Verbindungen und deren Sorptionskinetik bestimmt wird,

$T_{ME}=$ Erweichungstemperatur bzw. des Kristallitschmelzpunkts der eingesetzten Polymeren

$T_P=$ Prozeßtemperatur (in °C),

$D=$ Absorbierte Dosis der ionisierenden Strahlung (in Mrd)

eingestellt werden.

2. Vernetzbare olefinische Polymere nach Anspruch 1, dadurch gekennzeichnet, daß die olefinischen Polymere Homo- und/oder Copolymere von $\alpha$-Olefinen mit 2 bis 18 C-Atomen, bevorzugt lineare und/oder verzweigte Polyethylen-Homo- und/oder -Copolymere, Cycloolefin-Ethylen-Copolymere, Polypropylen-Homopolymere, statistische Propylen-Copolymere, Propylen- Blockcopolymere, statistische Propylen-Blockcopolymere, elastomere Polypropylene, isotaktisches Polybuten-1 und/oder 4-Methylpenten-1- Homo- und/oder -Copolymere sind, wobei die mittlere Korngröße der als Pulver, Granulate und/oder Grieße eingesetzten olefinischen Polymeren bei 0,001 bis 7 mm, bevorzugt bei 0,05 bis 4 mm, liegt.

3. Vernetzbare olefinische Polymere nach Anspruch 1 und 2, dadurch gekennzeichnet, daß die ethylenisch ungesättigten Organosilanverbindungen Acryloxyalkylsilane, Alkenylalkoxysilane, Alkenylhalogensilane, Aminoalkenylsilane, Aminovinylsilane, Cycloalkenylsilane, Methacryloxyalkylsilane, Vinylalkoxysilane, Vinylhalogensilane und/oder Vinylcarboxysilane sind.

4. Vernetzbare olefinische Polymere nach Anspruch 1 bis 3, dadurch gekennzeichnet, daß die weiteren ethylenisch ungesättigten Monomere Monovinylverbindungen, Divinylverbindungen, Allylverbindungen, Acrylsäure, Acrylsäurederivate, Methacrylsäure, Methacrylsäurederivate, ungesättigte Dicarbonsäureanhydride und/oder Diene sind.

5. Vernetzbare olefinische Polymere nach Anspruch 1 bis 4, dadurch gekennzeichnet, daß die weiteren Zusatzstoffe 0,01 bis 2,5 Gew.Teile Stabilisatoren, 0,1 bis 1 Gew.Teile Antistatika, 0,2 bis 3 Gew.Teile Pigmente , o,o5 bis 1 Gew.Teile Nukleierungsmittel , 5 bis 4o Gew.Teile Füll- und/oder Verstärkerstoffe, 5 bis 2o Gew.Teile elastifizierende Zusatzstoffe, 2 bis 2o Gew.Teile Flammschutzmittel, o,5 bis 1o Gew.Teile Lösungsmittel und/oder o,o1 bis 1 Gew.Teile, jeweils bezogen auf die olefinischen Polymeren, Verarbeitungshilfsmittel sind.

6. Verfahren zur Herstellung vernetzbarer olefinischer Polymerer aus olefinischen Polymeren, ethylenisch ungesättigten Organosilanverbindungen, weiteren Zusatzstoffen und gegebenenfalls weiteren ethylenisch ungesättigten Monomeren, gesättigten Organosilanverbindungen und Verdünnungsmitteln, dadurch gekennzeichnet, daß Mischungen aus

a) 100 Gew.Teilen olefinischen Polymeren,
b) 0,05 bis 10 Gew. Teilen ethylenisch ungesättigten Organosilanverbindungen, bevorzugt Organosilanverbindungen der Formel $XY_{3-n}SiR_n$, in der X eine pfropffähige ethylenisch ungesättigte Gruppe, Y Alkyl und/oder Aryl und R eine $C_1$ bis $C_8$-Alkoxy- und/oder Carboxygruppe und/oder Halogen darstellt, und n für die Zahlen 1, 2 oder 3 steht,
c) 0 bis 10 Gew.Teilen weiteren ethylenisch ungesättigten Monomeren,
d) 0 bis 10 Gew. Teilen gesättigten Organosilanverbindungen, bevorzugt Organosilanverbindungen der Formel $Z_{4-n}SiR_n$, in der Z eine Epoxyalkyl-, Glycidoxyalkyl-, Mercaptoalkyl-, Aminoalkyl- und/oder Isocyanatoalkyl - Gruppe darstellt und R eine $C_{1-}$ bis $C_8$- Alkoxy- und/oder Acetoxygruppe und/oder Halogen darstellt und n für die Zahlen 1, 2 oder 3 steht,
e) 0,01 bis 45 Gew.Teilen an weiteren Zusatzstoffen

unter Zusatz von 0,01 bis 5 Masse%, bezogen auf die eingesetzten olefinischen Polymeren, an Acylperoxiden, Alkylperoxiden, Hydroperoxiden, Ketonperoxiden, Perestern, Peroxidicarbonaten, Peroxiketalen, Azoverbindungen und/oder Azonitrilen als thermisch zerfallende Radikalbildner unter Inertbedingungen in einer ersten Stufe auf eine Temperatur $T_1$ erhitzt wird, die 30 bis 110°C, bevorzugt 10 bis 25°C, unterhalb der Erweichungstemperatur bzw. des Kristallitschmelzpunkts der eingesetzten Polymeren liegt und wobei bei einer Verweilzeit von 1 bis 24o Min., bevorzugt 2o bis 5o min, weniger als 5 Masse% des verwendeten thermisch zerfallenden Radikalbildners zerfallen dürfen, und daß die Mischungen in einer zweiten Stufe auf eine Reaktionstemperatur $T_2 > T_1$ erhitzt werden, die 10 bis 60°C, bevorzugt 5 bis 18°C, unterhalb der Erweichungstemperatur bzw. des Kristallitschmelzpunkts der eingesetzten Polymeren liegt und bei dem die Halbwertszeit des Zerfalls des verwendeten thermisch zertallenden Radikalbildners höchstens 60 min. und die Reaktionszeit mindestens 6 Halbwertszeiten des Zerfalls des verwendeten thermisch zerfallenden Radikalbildners beträgt.

7. Verfahren zur Herstellung vernetzbarer olefinischer Polymerer aus olefinischen Polymeren, ethylenisch ungesättigten Organosilanverbindungen, weiteren Zusatzstoffen und gegebenenfalls weiteren ethylenisch ungesättigten Monomeren, gesättigten Organosilanverbindungen und Verdünnungsmitteln, dadurch gekennzeichnet, daß Mischungen aus

a) 100 Gew.Teilen olefinischen Polymeren,
b) 0,05 bis 10 Gew. Teilen ethylenisch ungesättigten Organosilanverbindungen, bevorzugt Organosilanverbindungen der Formel $XY_{3-n}SiR_n$, in der X eine pfropffähige ethylenisch ungesättigte Gruppe, Y Alkyl und/oder Aryl und R eine $C_1$ bis $C_8$-Alkoxy- und/oder Carboxygruppe und/oder Halogen darstellt, und n für die Zahlen 1, 2 oder 3 steht,
c) 0 bis 10 Gew.Teilen weiteren ethylenisch ungesättigten Monomeren,
d) 0 bis 10 Gew. Teilen gesättigten Organosilanverbindungen, bevorzugt Organosilanverbindungen der Formel $Z_{4-n}SiR_n$, in der Z eine Epoxyalkyl-, Glycidoxyalkyl-, Mercaptoalkyl-, Aminoalkyl- und/oder Isocyanatoalkyl - Gruppe darstellt und R eine $C_{1-}$ bis $C_8$- Alkoxy- und/oder Acetoxygruppe und/oder Halogen darstellt und n für die Zahlen 1, 2 oder 3 steht,
e) 0,01 bis 45 Gew.Teilen an weiteren Zusatzstoffen
unter Zusatz von 0 bis 40 Masse% an inerten Verdünnungsmitteln einer ionisierenden Bestrahlung, die bevorzugt durch Nuklidstrahlenquellen enthaltende Bestrahlungseinrichtungen oder durch Elektronenbeschleuniger appliziert wird, bei Bestrahlungsdosen im Bereich von 0.01 bis 1,0 Mrd, bevorzugt von 0,01 bis 0,25 Mrd, und Temperaturen im Bereich von 5 bis 110°C, bevorzugt 20 bis 80°C, unterhalb der Erweichungstemperatur bzw. des Kristallitschmelzpunkts der eingesetzten Polymeren unterzogen werden, wobei die Prozeßbedingungen für die Herstellung der vernetzbaren olefinischen Polymeren zweckmäßig nach der Beziehung

$$M = K [T_{ME} + 80 - T_P / T_{ME} - T_p] \times \log(1 + 5,2 D) \times 100$$

M= Masseanteil an aufgepfropften ethylenisch ungesättigten Organosilanverbindungen bzw? an aufgepfropften ethylenisch ungesättigten Organosilanverbindungen und weiteren ethylenisch ungesättigten Verbindungen (in Masse%),

K= Empirischer Faktor, der durch die Art der ethylenisch ungesättigten Verbindungen und deren Sorptionskinetik bestimmt wird,

$T_{ME}$ = Erweichungstemperatur bzw. des Kristallitschmelzpunkts der eingesetzten Polymeren

$T_P$= Prozeßtemperatur (in °C),

D = Absorbierte Dosis der ionisierenden Strahlung (in Mrd)

eingestellt werden.

8. Verfahren zur Herstellung vernetzbarer olefinischer Polymerer nach Anspruch 7, dadurch gekennzeichnet, daß als olefinische Polymere Propylenpolymere eingesetzt werden, die ionisierende Bestrahlung bei Temperaturen von 20 bis 155°C, bevorzugt bei 80 bis 140°C, erfolgt, und die Prozeßbedingungen für die Herstellung der vernetzbaren Polypropylene zweckmäßig nach der Beziehung

$$M = K [ 240\text{-}T / 160\text{-}T ] \times \log ( 1 + 5{,}2\ D ) \times 100$$

M= Masseanteil an aufgepfropften ethylenisch ungesättigten Organosilanverbindungen bzw. an aufgepfropften ethylenisch ungesättigten Organosilanverbindungen und weiterer ethylenisch ungesättigten Verbindungen (in Masse%),

K= Empirischer Faktor, der durch die Art der ethylenisch ungesättigten Verbindungen und deren Sorptionskinetik bestimmt wird,

T= Prozeßtemperatur (in °C),

D= Absorbierte Dosis der ionisierenden Strahlung (in Mrd)

eingestellt werden.

9. Verfahren zur Herstellung vernetzbarer olefinischer Polymerer nach einem oder mehreren der Ansprüche 6 bis 8, dadurch gekennzeichnet, daß die Sorption der Reaktanden b), c) und d) durch die olefinischen Polymeren a) und die Umsetzung der sorbierten Reaktanden b), c) und d) mit den olefinischen Polymeren a) bei Drucken von 0,01 bis 1 MPa, bevorzugt bei Drucken von 0,05 bis 0,5 MPa, durchgeführt werden.

10. Anwendung von vernetzbaren olefinischen Polymeren nach einem oder mehreren der Ansprüche 1 bis 5 sowie von Mischungen mit nichtmodifizierten olefinischen Polymeren zur Herstellung von Folien, Fasern, Platten, Beschichtungen, Rohren, Hohlkörpern, Schaumstoffen und/oder Formteilen.